# EUROPEAN PATENT APPLICATION

(11) **EP 2 902 092 A1**
(43) Date of publication of application: **05.08.2015**
(21) Application number: 13842041.9
(22) Date of filing: 06.09.2013
(51) Int. Cl.: B01D 69/00, B01D 53/22, B01D 63/00, B01D 63/10, B01D 69/12, B01D 71/26, B01D 71/34, B01D 71/36, B01D 71/40, B01D 71/42, B01D 71/52, B01D 71/66, C01B 31/20, H01M 8/06

(54) **COMPLEX FOR CARBON DIOXIDE SEPARATION, MODULE FOR CARBON DIOXIDE SEPARATION, METHOD FOR PRODUCING COMPLEX FOR CARBON DIOXIDE SEPARATION**

(30) Priority: 28.09.2012 JP 2012217832; 30.08.2013 JP 2013179770
(71) Applicant: FUJI-FILM Corporation, Minato-ku Tokyo 106-8620 (JP)
(72) Inventor: ABURAYA, Yoshihiro, Ashigarakami-gun Kanagawa 258-8577 (JP)
(74) Representative: Hoffmann Eitle
(86) International application number: PCT/JP2013/074159
(87) International publication number: WO 2014/050517

(57) **Abstract**

Disclosed is a composite for carbon dioxide separation, containing, in the following order, a gas permeable support; a carbon dioxide separation layer containing a water absorptive polymer and a carbon dioxide carrier; a steam permeable porous protective layer having an average thickness of from 1 µm to 500 µm; and a supplied gas passage member.

## Description

### Technical Field

The present invention relates to a composite for carbon dioxide separation, a module for carbon dioxide separation and a method for producing a composite for carbon dioxide separation.

### Background Art

Recently, the development of a technique for selectively separating carbon dioxide in a mixed gas proceeds. For example, as countermeasures against global warming, there have been developed a technique for recovering carbon dioxide in exhaust gas and concentrating the recovered carbon dioxide and a technique for reforming hydrocarbon into hydrogen and carbon monoxide (CO) through steam reforming, reacting carbon monoxide with steam to produce carbon dioxide and hydrogen, eliminating carbon dioxide through a film selectively permeable to carbon dioxide, and thereby forming a composite for carbon dioxide separation mainly composed of hydrogen and used for obtaining a gas for a fuel cell or the like. A module for carbon dioxide separation which is densely filled with the composite for carbon dioxide separation in order to treat a larger amount of gas with a less volume is provided with a support as a flow passage material permeable to gas, a carbon dioxide separation membrane containing a carbon dioxide carrier, and a porous membrane having gas permeability, and carbon dioxide in gas is separated and removed by the function of the carbon dioxide separation membrane in the course of passage of gas through a void of the support.

For example, Japanese Patent Publication (JP-B) No. H7-102310 describes a carbon dioxide separation gel membrane as a facilitated transport membrane made of a hydrogel membrane formed by absorbing an aqueous solution containing a carbon dioxide carrier in a vinyl alcohol-acrylic acid salt copolymer having a crosslinking structure.

WO 2009/093666 describes a carbon dioxide facilitated transport membrane laminated body configured so that an aqueous solution containing a vinyl alcohol-acrylic acid salt copolymer and a carbon dioxide carrier such as cesium carbonate is coated onto a hydrophilic porous membrane of a porous membrane of a two-layer constitution in which a hydrophobic porous membrane and the hydrophilic porous membrane are superposed, a hydrogel membrane containing the vinyl alcohol-acrylic acid salt copolymer and the carbon dioxide carrier is formed in the hydrophilic porous membrane, and the hydrophobic porous membrane is superposed on the hydrogel membrane.

### SUMMARY OF INVENTION

Since the hydrogel membrane described in JP-B No. H7-102310 is used in a method of separating carbon dioxide from a high flow gas containing a large amount of steam under pressure, due to condensed water derived from the steam, the hydrogel membrane is deteriorated, and carbon dioxide separation performance is reduced.

In the carbon dioxide facilitated transport membrane laminated body described in WO2009/093666, in which a hydrogel membrane is held between two porous membranes, it is described that condensed water is repelled by the hydrophobic porous membrane, and the condensed water is prevented from being infiltrated into the hydrogel membrane. If such infiltration of the condensed water into the hydrogel membrane is prevented, the deterioration of the hydrogel membrane is reduced, and the reduction in the carbon dioxide separation performance is suppressed.

However, in the carbon dioxide facilitated transport membrane laminated body described in WO2009/093666, since the hydrogel membrane is formed in the hydrophilic porous membrane, the gas permeability at the portion is decreased, and the carbon dioxide separation performance is not satisfactory. Since a supplied gas passage member is not used, there is no problem due to the use of the supplied gas passage member.

In view of the above situations, the present invention provides a composite for carbon dioxide separation which certainly has excellent carbon dioxide separation performance, suppresses reduction in carbon dioxide separation performance due to the condensed water derived from steam generated in a method for separating carbon dioxide from a high flow gas containing the steam under a pressurized environment (for example, a pressure of not less than several hundred kPa, and further, for example, 1 MPa or higher), and has the carbon dioxide separation performance improved by a turbulent effect according to a porous protective layer and a supplied gas passage material. The present invention further provides a module for carbon dioxide separation using the composite for carbon dioxide separation and a method for producing a composite for carbon dioxide separation.

The present invention solving the above problem is as follows:
<1> a composite for carbon dioxide separation, containing, in the following order, a gas permeable support; a carbon dioxide separation layer containing a water absorptive polymer and a carbon dioxide carrier; a steam permeable porous protective layer having an average thickness of from 1 µm to 500 µm; and a supplied gas passage member;
<2> the composite for carbon dioxide separation described in <1> in which an average pore diameter of the porous protective layer is from 0.005 µm to 1000 µm;
<3> the composite for carbon dioxide separation described in <1> or <2> in which a porosity of the porous protective layer is from 3% to 90%;
<4> the composite for carbon dioxide separation described in any one of <1> to <3> in which the porous protective layer is configured from at least one of polytetrafluoroethylene, polyvinylidene-fluoride, polymethylpentene, polyphenylene sulfide, polyether sulfone, polypropylene, polysulfone, polyacrylonitrile, polyimide, or polyamide;
<5> the composite for carbon dioxide separation described in any one of <1> to <4> in which the porous protective layer and the supplied gas passage member are secured to each other;
<6> the composite for carbon dioxide separation described in any one of <1> to <5> in which the supplied gas passage member has an average thickness of from 100 µm to 1000 µm;
<7> a module for carbon dioxide separation including the carbon dioxide separation composite described in any one of <1> to <6> helically wound around a porous hollow central pipe;
<8> a method for producing a composite for carbon dioxide separation, the method including: a carbon dioxide separation layer formation process for coating an aqueous solution containing a water absorptive polymer and a carbon dioxide carrier onto a gas permeable support, drying the coating, and forming a carbon dioxide separation layer; and a porous protective layer formation process for laminating a steam permeable porous protective layer having an average thickness of from 1 µm to 500 µm onto the carbon dioxide separation layer; and
<9> a method for producing a composite for carbon dioxide separation, the method including: a carbon dioxide separation layer formation process for coating an aqueous solution containing a water absorptive polymer and a carbon dioxide carrier onto a gas permeable support, drying the coating, and forming a carbon dioxide separation layer; a porous protective layer formation process for laminating a steam permeable porous protective layer having an average thickness of from 1 µm to 500 µm onto the carbon dioxide separation layer; and a supplied gas passage member formation process for bonding the supplied gas passage member onto the porous protective layer.

The present invention provides a composite for carbon dioxide separation which certainly has excellent carbon dioxide separation performance, suppresses reduction in carbon dioxide separation performance due to condensed water derived from steam generated in a method for separating carbon dioxide from a high flow gas containing the steam under a pressurized environment, and has the carbon dioxide separation performance improved by a turbulent effect according to a porous protective layer and a supplied gas passage material.

The present invention further provides a module for carbon dioxide separation using the composite for carbon dioxide separation and a method for producing a composite for carbon dioxide separation.

### BRIEF DESCRIPTION OF DRAWINGS

Fig. 1 is a cross-sectional view of a composite for carbon dioxide separation according to oneembodiment of the present invention.
Fig. 2 is a configuration diagram showing a production apparatus according to one embodiment for implementing a method for producing a composite for carbon dioxide separation according to one embodiment of the invention.
Fig. 3 is a configuration diagram showing a production apparatus according to one embodiment for implementing a method for producing a composite for carbon dioxide separation according to another embodiment of the invention.
Fig. 4 is a schematic configuration diagram showing one embodiment of a spiral type module for carbon dioxide separation incorporated with the composite for carbon dioxide separation according to the present invention and partially cutout.

### DESCRIPTION OF EMBODIMENTS

Hereinafter, a composite for carbon dioxide separation and a method for producing a composite for carbon dioxide separation according to the present invention will be described with reference to the drawings. In the drawings, the same reference numeral shows the same component in each drawing, and a redundant description thereof may be omitted.

### <Composite for Carbon Dioxide Separation>

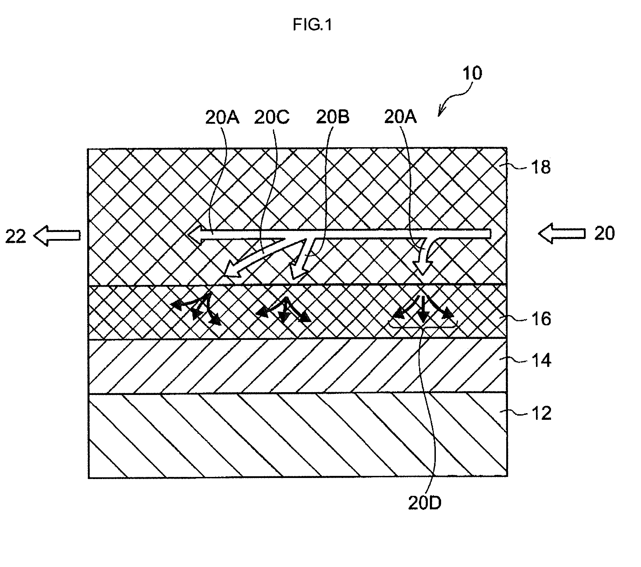

Fig. 1 is a cross-sectional view of a composite for carbon dioxide separation according to one embodiment of the present invention.

As shown in Fig. 1, a composite 10 for carbon dioxide separation according to the present invention is configured so that while one surface of a carbon dioxide separation layer 14 is protected by a gas permeable support 12, the other surface is protected by a steam permeable porous protective layer 16 having an average thickness of from 1 µm to 500 µm, and a member 18 for a supplied gas passage is provided on the porous protective layer 16.

The carbon dioxide separation layer 14 is configured to contain a water absorptive polymer and a carbon dioxide carrier. When carbon dioxide contained in a supply gas is separated by using the composite 10 for carbon dioxide separation, a supply gas 20 is first supplied to a member 18 for a supplied gas passage of the composite 10 for carbon dioxide separation. At this time, the supply gas 20 is divided and diffused as shown by arrows 20A, 20B, and 20C in the process of flowing in the member 18 for a supply gas flow passage in the direction of the arrow 20A, and, subsequently, the supply gas thus divided and diffused is in contact with the porous protective layer 16 after being divided and diffused by the porous protective layer 16 as shown by an arrow 20D. The supply gas 20 divided and diffused by the member 18 for a supplied gas passage and the porous protective layer 16 is in contact with the carbon dioxide separation layer 14 over a wide area, and carbon dioxide contained in the supply gas 20 is efficiently absorbed and diffused in the carbon dioxide separation layer 14. Thus, carbon dioxide contained in the supply gas 20 is efficiently separated.

Even when steam contained in the supply gas 20 is condensed in the member 18 for a supplied gas passage of the composite 10 for carbon dioxide separation according to the present invention, the steam permeable porous protective layer 16 having an average thickness of from 1 µm to 500 µm serves as a barrier to prevent condensed water from being infiltrated into the carbon dioxide separation layer 14. Even if seam becomes condensed water in the carbon dioxide separation layer 14, the supply gas 20 is divided and diffused by two layers including the member 18 for a supplied gas passage and the porous protective layer 16, as described above, and therefore, the volume of the condensed water is minimal, in addition, the condensed water is not formed at a local place; thus, the carbon dioxide separation layer 14 is hardly deteriorated. As a result, the composite 10 for carbon dioxide separation in which reduction in the carbon dioxide separation performance is suppressed even in use for a long time can be obtained.

The composite 10 for carbon dioxide separation according to the present invention includes the gas preamble support 12, the carbon dioxide separation layer 14 containing a water absorptive polymer and a carbon dioxide carrier, the steam permeable porous protective layer 16 having an average thickness of from 1 µm to 500 µm, and the member 18 for a supplied gas passage in this order.

### «Carbon Dioxide Separation Layer»

The carbon dioxide separation layer 14 is configured to contain a water absorptive polymer and a carbon dioxide carrier and preferably formed of a homogeneous membrane. When the carbon dioxide separation layer 14 is formed of a homogeneous membrane, high carbon dioxide separation performance can be maintained, and therefore, it is preferable. The "homogeneous membrane" means a membrane in such a state that components constituting the carbon dioxide separation layer 14 are uniformly mixed with each other and includes a membrane in a substantially uniform state considered to be uniform at a glance.

### 1. Water absorptive polymer

The water absorptive polymer functions as a binder and holds water when used in a carbon dioxide separation layer to exhibit a carbon dioxide separation function according to a carbon dioxide carrier. The water absorptive polymer is dissolved in water to allow formation of a coating liquid, and from the viewpoint that the carbon dioxide separation layer has a high water-absorbing property (moisture-retaining property), a water absorptive polymer having a high water-absorbing property is preferred, and a water absorptive polymer absorbing from 5 times to 1000 times by mass of water with respect to the mass of the water absorptive polymer itself is preferred.

From the viewpoints of water-absorbing property, film formability, and strength, as the water absorptive polymer, a polyvinyl alcohol-polyacrylic acid salt copolymer, a polyvinyl alcohol-polyacrylic acid (PVA-PAA) copolymer, polyvinyl alcohol, polyacrylic acid, polyacrylic acid salt, polyvinylbutyral, poly-N-vinylpyrrolidone, poly-N-vinylacetoamide, and polyacrylamide are suitable, for example, and PVA-PAA copolymer is particularly preferred. PVA-PAA copolymer has a high water absorbing power, and the strength of hydrogel is large even when water is absorbed at a high rate. The content of polyacrylic acid salt in PVA-PAA copolymer is preferably from 5 mol% to 95 mol%, for example, more preferably from 30 mol% to 70 mol%. Examples of polyacrylic acid salt include not only alkali metal salt such as sodium salt and potassium salt but also ammonium salt and organic ammonium salt.

Examples of commercially available PVA-PAA copolymers include Kurastomer -AP20 (trade name, manufactured by Kuraray Co., Ltd.).

### 2. Carbon dioxide carrier

The carbon dioxide carrier contained in the carbon dioxide separation layer 14 having compatibility with carbon dioxide and exhibiting water solubility may be used, and a common carbon dioxide carrier may be used. The carbon dioxide carrier used in this case is a material having compatibility with carbon dioxide, and various kinds of water soluble inorganic and organic materials exhibiting basicity are used. Examples of the water soluble inorganic and organic materials include alkali metal carbonate, alkali metal bicarbonate, and alkali metal hydroxide.

Examples of alkali metal carbonate include lithium carbonate, sodium carbonate, potassium carbonate, rubidium carbonate, and cesium carbonate.

Examples of alkali metal bicarbonate include lithium hydrogencarbonate, sodium hydrogencarbonate, potassium hydrogencarbonate, rubidium hydrogencarbonate, and cesium hydrogencarbonate.

Examples of alkali metal hydroxide include cesium hydroxide and rubidium hydroxide.

Among them, alkali metal carbonate is preferred, and a compound containing cesium or rubidium is preferred.

A mixture of two or more kinds of carbon dioxide carries may be used. For example, there is a mixture of cesium carbonate and potassium carbonate.

### 3. Other components

The carbon dioxide separation layer 14 may contain other components (additives) other than the water absorptive polymer, the carbon dioxide carrier, and water in a range where separation characteristics as a carbon dioxide separation membrane are not adversely affected.

As components to be arbitrarily used, there are a gelling agent controlling such a so-called setting property that in a process for coating an aqueous solution for carbon dioxide separation layer formation (coating liquid), which contains a water absorptive polymer and a carbon dioxide carrier, onto the gas permeable support 12, drying the coating liquid, and forming the carbon dioxide separation layer 14, a coating liquid film on the gas permeable support 12 formed by coating the coating liquid is cooled and gelled, a viscosity modifier that controls viscosity during coating when the coating liquid is coated by a coating applicator, a cross-linking agent used for enhancing film strength of a carbon dioxide separation layer, a carbon dioxide absorption promoter, or others such as a surfactant, a catalyst, an auxiliary solvent, a film strength modifier, and, in addition, there is a detection agent for facilitating inspection of presence or absence of a defect of a formed carbon dioxide carbon separation layer.

### 3-1. Gelling agent

As the gelling agent, there is a gelling agent having such a property that a coating liquid composition containing a water absorptive polymer, a carbon dioxide carrier, a gelling agent, and water is prepared at 50°C or higher, a coating liquid film coated to have a solution film thickness of 1 mm or less is placed under a temperature condition of 12°C and then gelled for an elapsed time within 120 seconds, and even when the coating liquid film is placed at an angle other than a horizontal state, the film thickness is not changed by gravity within one minute. As preferable specific examples of such a gelling agent, there are agars. As commercial products of agars, there are Ina Agar UP-37, UM-11S, SY-8, ZY-4, ZY-6 (manufactured by Ina Food Industry Co., Ltd.), Agarose H, Agarose S (manufactured by Nippon Gene Co., Ltd.), and so on. Reduction in gas permeability of the gas permeable support 12 due to infiltration of components such as a water absorptive polymer into the gas permeable support 12 can be suppressed by containing such a gelling agent.

### 3-2. Viscosity modifier

As preferable specific examples of the viscosity modifier, there is carboxymethyl cellulose. When carboxymethyl cellulose is contained in an aqueous solution for carbon dioxide separation layer formation (coating liquid), coating with a roll coater such as a three roll coater can be facilitated. Further, the reduction in the gas permeability of the gas permeable support 12 due to infiltration of components such as a water absorptive polymer into the gas permeable support 12 can be suppressed.

### 3-3. Cross-linking agent

A cross-linking structure is formed by a water absorption polymer, whereby the strength of the carbon dioxide separation layer 14 may be enhanced, and as a cross-linking method in this case, a conventionally known method such as thermal cross-linking, ultraviolet cross-linking, electron beam cross-linking, or radiation cross-linking may be performed. Particularly, it is preferable from the viewpoint of enhancement of the film strength that the cross-linking structure is formed using a cross-linking agent having two or more functional groups (also referred to as a crosslinkable functional group) that can be thermally crosslinked by reacting with a water absorptive polymer such as a polyvinyl alcohol-polyacrylic acid salt copolymer, and as a cross-linking agent having two or more crosslinkable functional groups to be used for this purpose, there are polyvalent glycidyl ether, polyvalent alcohol, polyvalent isocyanate, polyvalent aziridine, haloepoxy compound, polyvalent aldehyde, polyvalent amine, and so on.

### 3-4. Carbon dioxide absorption promoter,

The carbon dioxide absorption promoter is a compound for promoting reaction of carbon dioxide with a carbon dioxide carrier and contains, for example, a nitrogen-containing compound and sulfur oxide.

As the nitrogen-containing compound, there may be used amino acids such as glycine, alanine, serine, proline, histidine, taurine, and diaminopropionic acid; heterocompounds such as pyridine, histidine, piperazine, imidazole, and triazine; alkanolamines such as monoethanolamine, diethanolamine, triethanolamine, monopropanolamine, dipropanolamine, and tripropanolamine; cyclic polyetheramines such as cryptand [2.1] and cryptand [2.2]; bycyclic polyetheramines such as cryptand [2.2.1] and cryptand [2.2.2]; porphyrin, phthalocyanine, ethylenediamine tetraacetate, and so on.

As the sulfur compound, amino acids such as cystine and cysteine, polythiophene, dodecylthiol, and so on may be used.

When a carbon dioxide promoter is added, the content is suitably in a range of from 20% by mass to 200% by mass based on a total mass of a carbon dioxide separation layer.

From the viewpoint that the carbon dioxide separation layer 14 having excellent carbon dioxide separation performance can be obtained, the average thickness of the carbon dioxide separation layer 14 is preferably from 5 µm to 50 µm, more preferably from 10 µm to 40 µm, particularly preferably from 15 µm to 30 µm.

### <<Steam Permeable Porous Protective Layer Having Average Thickness of from 1 µm to 500 µm>>

The porous protective layer 16 of the composite 10 for carbon dioxide separation according to the present invention prevents the carbon dioxide separation layer 14 from being deformed by receiving pressure and has a function of dividing and diffusing the supply gas 20 in contact with the carbon dioxide separation layer 14.

The porous protective layer 16 has an average thickness of from 1 µm to 500 µm and has carbon dioxide permeability, steam permeability, and porosity that does not cause permeation of liquid water. When the average thickness of the porous protective layer 16 is less than 1 µm, the function of preventing the carbon dioxide separation layer 14 from being deformed by receiving pressure becomes insufficient, and when the average thickness exceeds 500 µm, passage of the supply gas 20 in a thickness direction of the porous protective layer 16 is interfered, and the carbon dioxide separation performance is inferior. To make matters worse, for example when the porous protective layer 16 is used in a spiral type module for carbon dioxide separation, a winding diameter is too large, and thus defects are more likely to occur. Considering the balance between them, the average thickness of the porous protective layer 16 is preferably from 1 µm to 500 µm and more preferably from 10 µm to 100 µm.

The porous protective layer 16 is required to have carbon dioxide permeability and steam permeability, and condensed water derived from steam does not permeate through the porous protective layer 16. Thus, it is preferable that the pores of the porous protective layer 16 have an average pore diameter of from 0.005 µm to 1000 µm. Since such advantages that the supply gas 20 more quickly passes in the thickness direction of the porous protective layer 16, and excellent carbon dioxide separation performance is held are obtained, the average pore diameter is more preferably from 0.005 µm to 500 µm and still more preferably from 0.01 µm to 100 µm. The average pore diameter means a value measured and calculated by a "Palm Porometer" manufactured by PMI.

In the porous protective layer 16, it is preferable that the porosity is in the range of from 3% to 90%. When the porous protective layer 16 having porosity in such a range is provided, the supply gas 20 more quickly passes in the thickness direction of the porous protective layer 16, and excellent performance as a carbon dioxide separation membrane can be held. The porosity is more preferably in the range of from 5% to 70% and still more preferably in the range of from 10% to 70% since the advantage of developing the gas turbulence effect.

A material constituting the porous protective layer 16 is not limited particularly, and any material can be used as long as a porous layer having an average thickness of from 1 µm to 500 µm can be formed. Examples of the material include polytetrafluoroethylene (PTFE), polyvinylidene fluoride (PVDF), polymethylpentene, polyphenylene sulfide (PPS), polyether sulfone (PES), polypropylene (PP), polysulfone (PSF), polyacrylonitrile (PAN), polyimide, and polyamide. Among them, a hydrophobic material is preferred, and PP and PTFE excellent in steam permeability and condensed water impermeability derived from steam are preferred. In particular, since PTFE porous membranes having various average pore diameters are commercially available, PTFE is easily available.

When the member 18 for a supplied gas passage is formed of PP, the porous protective layer 16 is formed of PP, whereby it is preferable in that such an advantage that the member 18 for a supplied gas passage and the porous protective layer 16 can be secured by thermal fusion-bonding is obtained.

### <<Supplied Gas Passage Member»

The member 18 for a supplied gas passage is a layer into which the supply gas 20 is fed and has a function as a spacer, and while the supply gas 20 passes through the member 18 for a supplied gas passage, the member 18 for a supplied gas passage divides and diffuses the supply gas 20. In the present invention, since the member 18 for a supplied gas passage is provided, the function as the module for carbon dioxide separation can be satisfactorily exhibited.

As the member 18 for a supplied gas passage, a net-like member having a mesh opening of from 30 µm to 2000 µm is preferably used. Since a flow passage of the supply gas 20 is changed depending on the net shape, a shape of a unit lattice of the net is selected from shapes such as a rhombus and a parallelogram according to purposes. As long as a material has sufficient air permeability and stretch resistance against tensile stress, non-woven fabric, woven fabric, knitted fabric, and so on may be used.

When it is assumed that the supply gas 20 containing steam is supplied at high temperature, it is preferable that the member 18 for a supplied gas passage has moisture-heat resistance.

The "heat resistance" of the "moisture-heat resistance" means that the member 18 for a supplied gas passage has heat resistance of 80°C or higher. Specifically, the heat resistance of 80°C or higher means that a form before storage is maintained after storage for two hours under a temperature condition of 80°C or higher, and visually confirmable curling due to thermal contraction or thermal fusion does not occur. The "moisture resistance" of the "moisture-heat resistance" means that the form before storage is maintained after storage for two hours under a condition of 40°C and 80% RH, and the visually confirmable curling due to thermal contraction or thermal fusion does not occur.

Although the material of the member 18 for a supplied gas passage is limited in no way, examples of the member 18 for a supplied gas passage include an inorganic material such as paper, fine paper, coat paper, cast coat paper, synthetic paper, cellulose, synthetic resin, metal, glass, and ceramics.

Preferred examples of the synthetic resin include polyethylene, polystyrene, polyethylene terephthalate (PET), polyethylene naphthalate (PEN), polytetrafluoroethylene (PTFE), polyether sulfone (PES), polyphenylene sulfide (PPS), polysulfone (PSF), polypropylene (PP), polyimide, polyetherimide, polyether ether ketone, and polyvinylidene-fluoride (PVDF).

Further, non-woven fabric, woven fabric, knitted fabric, and so on formed using fiber, monofilament, cord, and so on formed of the already described resin and inorganic material are preferably used.

Examples of preferable materials from the viewpoint of the moisture-heat resistance include an inorganic material such as ceramic, glass, and metal and an organic resin material having heat resistance of 100°C or higher, and high molecular weight polyester, polyolefin, heat resistant polyamide, polyimide, polysulphone, aramid, polycarbonate, metal, glass, and ceramics are preferably used. More specifically, it is preferable to be configured to contain at least one kind of materials selected from a group consisting of ceramics, polytetrafluoroethylene, polyvinylidene-fluoride, polyether sulfone, polyphenylene sulfide, polysulphone, polyimide, polypropylene, polyetherimide, andpolyether ether ketone.

The member 18 for a supplied gas passage is available as a commercial product.

Although the average thickness of the member 18 for a supplied gas passage is not limited particularly, from 100 µm to 1000 µm is preferred, from 150 µm to 950 µm is more preferred, and from 200 µm to 900 µm is still more preferred.

It is preferable that the member 18 for a supplied gas passage is secured to the porous protective layer 16. According to this constitution, the member 18 for a supplied gas passage and the porous protective layer 16 can be prevented from being relatively shifted. It is preferable that the member 18 for a supplied gas passage and the porous protective layer 16 are secured by thermal fusion-bonding. In order to facilitate the thermal fusion-bonding, it is preferable that the member 18 for a supplied gas passage and the porous protective layer 16 are formed of the same material. For example, it is preferable that both the member 18 for a supplied gas passage and the porous protective layer 16 use polypropylene as the material. A portion to be thermally fusion-bonded is not required to be solid over the entire surface and may be provided randomly and sparsely as long as the member 18 for a supplied gas passage and the porous protective layer 16 can be prevented from being shifted in a direction parallel to the surface. For example, suitable number of the portion is from 1/cm² to 10000/cm².

### «Gas Permeable Support»

The gas permeable support 12 is not limited particularly as long as it has gas permeability and particularly carbon dioxide permeability.

As materials of the gas permeable support 12, there may be preferably used paper, fine paper, coat paper, cast coat paper, synthetic paper, cellulose, polyester, polyolefin, polyamide, polyimide, polysulphone, aramid, polycarbonate, metal, glass, and ceramics. More specifically, there may be preferably used resin materials such as polyethylene, polystyrene, polyethylene terephthalate, polytetrafluoroethylene, polyether sulfone, polyphenylene sulfide, polysulphone, polypropylene, polyetherimide, polyether ether ketone, and polyvinylidene-fluoride.

Since the gas permeable support 12 is the passage of carbon dioxide separated by the carbon dioxide separation layer 14, the carbon dioxide permeability is required to be favorable. Thus, it is desirable that the water absorptive polymer constituting the carbon dioxide separation layer 14 and so on are not infiltrated into the gas permeable support 12.

From such a viewpoint, a porous resin sheet is most preferred, and a composite support of a porous resin sheet and non-woven fabric is a preferable aspect. In the case of the composite support of a porous resin sheet and non-woven fabric, the carbon dioxide separation layer 14 is formed by coating a coating liquid containing a water absorptive polymer and a carbon dioxide carrier onto a surface on the porous resin sheet side and drying the coating liquid or by previously coating the coating liquid onto a temporary support, drying the coating liquid, forming the carbon dioxide separation layer 14, and then transferring the carbon dioxide separation layer 14 onto a surface on the porous resin sheet side of the composite support, whereby the carbon dioxide separation layer 14 is formed.

From the viewpoint of prevention of infiltration of a water absorptive polymer and so on, it is preferable that the pore diameter of the porous resin sheet is small. Specifically, the maximum pore diameter is preferably from 0.05 µm to 0.5 µm and more preferably from 0.05 µm to 0.2 µm. From the viewpoint of easiness of availability, the most suitable range is from 0.05 µm to 0.2 µm.

The "maximum pore diameter" is a value measured by the following method.

### (Method of measuring maximum pore diameter and minimum pore diameter)

In the measurement of the maximum pore diameter, the maximum pore diameter (babble point) is measured by a bubble point method. As a measuring device, a palm porometer manufactured by PMI is used (conforming to JIS K 3832), and specifically, a porous resin sheet cut into 3 cm squares is immersed in a surfactant liquid (Galle wick liquid). The porous resin sheet was taken out, and an extra surfactant liquid was lightly wiped off. After that, the porous resin sheet is held between two metal meshes and set in a measurement cell of the device. The Galle wick liquid is used as a measuring liquid, gradual pressurization with air is performed at a room temperature (25°C), and the bubble point is measured.

In the gas permeable support 12, it is preferable that the surface on the side in contact with at least the carbon dioxide separation layer 14 is a hydrophobic surface. When the surface on the side in contact with the carbon dioxide separation layer 14 is a hydrophobic surface, penetration of the carbon dioxide separation layer 14 into the gas permeable support 12 can be more effectively suppressed, and a membrane surface can be uniformly formed. When the surface is hydrophilic, in a case in which a coating liquid containing a water absorptive polymer and a carbon dioxide carrier is coated and dried to form the carbon dioxide separation layer 14, the water absorptive polymer is likely to be infiltrated into the pores of the gas permeable support 12, so that the gas permeability may be reduced, or a heterogeneous carbon dioxide separation layer may be formed. To make matters worse, the carbon dioxide separation layer 14 containing water may be easily impregnated into the pores under a use environment, and film thickness distribution of the carbon dioxide separation layer 14 and performance degradation with the elapse of time may occur.

Here, "hydrophobicity" refers that a water contact angle at a room temperature (25°C) is 100° or higher.

As the porous resin sheet, a membrane body having a high self-supporting property and a high porosity is generally preferably used. In particular, a porous resin sheet formed by containing a resin selected from a group consisting of polypropylene and a fluorine-containing resin is preferred.

More specifically, stretched porous membranes of polyphenylene sulfide, polysulphone, polytetrafluoroethylene, polyvinylidene-fluoride, and high molecular weight polyethylene and so on have high porosity, and diffusion of carbon dioxide is hardly inhibited. Thus, it is preferable from the viewpoint of strength and production suitability.

Among them, from the viewpoints of heat resistance and durability, as a resin material, at least one kind of polytetrafluoroethylene (PTFE), polyether sulfone, polyphenylene sulfide, polysulfone, polypropylene, polyetherimide, polyether ether ketone, or polyvinylidene-fluoride (PVDF) is preferred, and polytetrafluoroethylene is particularly preferably used from the viewpoint of temporal stability.

In the composite 10 for carbon dioxide separation, although use temperature is different according to application use, the composite 10 for carbon dioxide separation is often used at a high temperature of approximately 130°C and under high humidity containing steam, for example. Thus, it is preferable that the gas permeable support 12 has heat resistance with less change in a pore structure even at 130°C and is formed of a material with less hydrolyzability. From such a viewpoint, the composite 10 for carbon dioxide separation formed by containing a resin selected from a group consisting of fluorine-containing resins such as polypropylene, polytetrafluoroethylene (PTFE), and polyvinylidene-fluoride (PVDF) is preferred, and a porous PTFE sheet is most preferred.

Although the porous resin sheet can be used alone as the gas permeable support 12, a composite support integrated with a reinforcement sheet and, for example, a composite support in which non-woven fabric for reinforcement excellent in permeability is stacked on the side not in contact with the carbon dioxide separation layer 14 and integrated therewith can be preferably used.

In the gas permeable support 12, from the viewpoint of having both gas permeability and strength, the average thickness is preferably in a range of from 30 µm to 500 µm. When the average thickness is 500 µm or less, the gas permeability is favorable, and when the average thickness is 30 µm or more, the strength is favorable. The average thickness is more preferably from 50 µm to 300 µm and still more preferably from 50 µm to 200 µm.

### <Method for Producing Composite for Carbon Dioxide Separation>

Next, a method for producing a composite for carbon dioxide separation according to the present invention will be described.

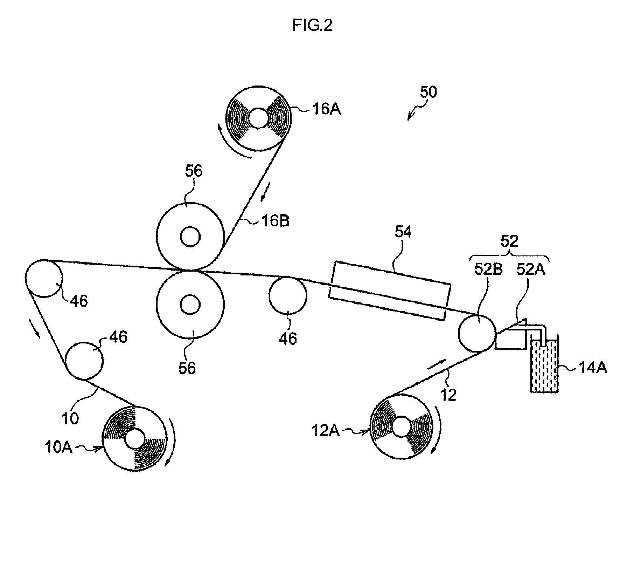

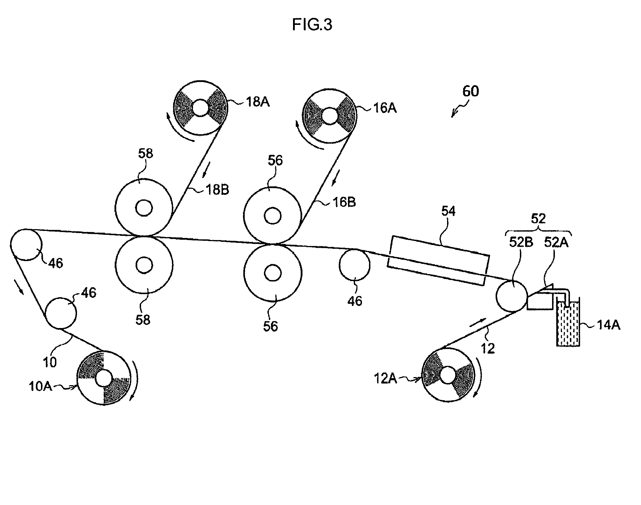

Fig. 2 is a configuration diagram showing a production apparatus 50 according to one embodiment for implementing the method for producing a composite for carbon dioxide separation according to one embodiment of the invention. The production apparatus 50 is a production apparatus from which a process for bonding the member 18 for a supplied gas passage in a production apparatus of Fig. 3 is omitted.

Fig. 3 is a configuration diagram showing a production apparatus 60 according to one embodiment for implementing a method for producing a composite for carbon dioxide separation according to another embodiment of the invention.

As shown in Fig. 2, a gas permeable support 12 fed in the direction of an arrow from a web roll 12A is conveyed while being supported by a conveyance roll 46. First, in a coating apparatus 52, an aqueous solution (coating liquid) for carbon dioxide separation layer formation in a storage portion 14A is fed to a coating die 52A and coated onto a surface of the gas permeable support 12 suspended from the coating die 52A to a back-up roll 52B serving as a conveyance roll. Then, the coating liquid film on the gas permeable support 12 is dried by a drying device 54. In the drying device 54, the coating liquid film is dried by blowing of drying air, irradiation with heat rays, or a combination of them, for example, and the carbon dioxide separation layer 14 is formed. Then, a film 16B for porous protective layer formation fed from the roll 16A is laminated by a pair of rolls 56, 56, and the porous protective layer 16 is provided on a surface of the carbon dioxide separation layer 14. The composite 10 for carbon dioxide separation thus produced is wound as a roll 10A.

As shown in the production apparatus of Fig. 3, a member 18B for a supplied gas passage fed from a roll 18A is further bonded on the porous protective layer 16 by the pair of rolls 58, 58, whereby the member 18 for a supplied gas passage may be provided.

According to the method for producing a composite for carbon dioxide separation according to the present invention, the composite 10 for carbon dioxide separation can be produced with high productivity by such a continuous roll-to-roll method that a long web of the gas permeable support 12 is continuously fed from the web roll 12A of the gas permeable support 12 and conveyed, in the process of conveyance an aqueous solution containing a water absorptive polymer and a carbon dioxide carrier is coated onto the gas permeable support 12, the coating is dried to form the carbon dioxide separation layer 14, and the steam permeable porous protective layer 16 having an average thickness of from 0.1 µm to 500 µm is laminated onto the carbon dioxide separation layer 14 and then wound into a roll shape.

The carbon dioxide separation layer 14 has such an essential characteristic that the carbon dioxide separation layer 14 is likely to be deformed and damaged by physical pressure, scraping, and so on. According to the method for producing the composite 10 for carbon dioxide separation according to the present invention, when the laminated body is wound into a roll shape, one surface of the carbon dioxide separation layer 14 is protected by the gas permeable support 12, and the other surface is protected by the steam permeable porous protective layer 16 having an average thickness of from 0.1 µm to 500 µm; therefore, the carbon dioxide separation layer 14 is not damaged even if the physical pressure, scraping, or the like is applied thereto, and handling is facilitated.

According to the method for producing the composite 10 for carbon dioxide separation produced by the production apparatus of Fig. 3, since it is configured so that the member 18 for a supplied gas passage is provided on the porous protective layer 16, similarly, the carbon dioxide separation layer 14 is not damaged even if the physical pressure, scraping, or the like is applied thereto, and handling is facilitated.

### «Process for Coating Aqueous Solution (Coating Liquid) for Carbon Dioxide Separation Layer Formation»

This process is a process for coating an aqueous solution (coating liquid) 14A for carbon dioxide separation layer formation onto a surface of the gas permeable support 12, conveyed in a fixed direction, with the use of the coating apparatus 52.

Although the content of a water absorptive polymer in the coating liquid 14A depends on the kind, from the viewpoint of forming a carbon dioxide separation layer and allowing the carbon dioxide separation layer to sufficiently hold water, the content is preferably from 1% by mass to 30% by mass and more preferably from 2% by mass to 15% by mass.

The coating apparatus 52 is provided with the storage portion 14A in which a prepared coating liquid is stored and the coating die 52A which coats the coating liquid stored in the storage portion 14A onto the surface of the gas permeable support 12 suspended from the back-up roll 52B serving as a conveyance roll. The coating die 52A can freely adjust a flow rate of the coating liquid and a gap width from the gas permeable support 12 and enabling coating with various thickness to supports having various thicknesses. Although illustration is omitted, the storage portion 14A is provided with a heater for controlling the temperature of the coating liquid and a stirring device for stirring the coating liquid.

The coating apparatus 52 is not limited to the above configuration and is suitably selected from a curtain flow coater, an extrusion die coater, an air doctor coater, a blade coater, a rod coater, a knife coater, a squeeze coater, a reverse roll coater, or a bar coater. From the viewpoint of film thickness uniformity, the amount of coating and so on, an extrusion die coater is particularly preferred.

Although the coating amount depends on composition and concentration of a coating liquid composition, when the coating amount per unit area is too small, pores may be formed in a coating film in the drying process, or the strength as the carbon dioxide separation layer may be insufficient. Meanwhile, when the coating amount is too large, variation in film thickness may be increased, or the film thickness of the carbon dioxide separation layer to be obtained is too large, and the carbon dioxide permeability may be decreased.

From those viewpoints, the average thickness of the coating liquid film coated onto the surface of the gas permeable support 12 is preferably 30 µm or more, more preferably 50 µm or more, and particularly preferably 100 µm or more.

### «Process for Drying Coating Liquid Film of Aqueous Solution (Coating Liquid) for Carbon Dioxide Separation Layer Formation»

The drying process is a process for drying a coating liquid film formed on the gas permeable support 12 in the drying device 54 to obtain the carbon dioxide separation layer 14. At that time, thermal cross-linking may be performed simultaneously with the process as desired. For example, although the coating liquid film on the gas permeable support 12 is dried by being subjected to hot air in the drying device 54, when a coating liquid contains a cross-linking agent, a cross-linking reaction proceeds by the heating with hot air.

When hot air is blown against the coating liquid film, it is preferable that the wind speed is set to such a value that the coating liquid film can be quickly dried, and the film shape of the coating liquid film is not collapsed, and, for example, the wind speed is set to be preferably from 1 m/min to 80 m/min, more preferably from 6 m/min to 70 m/min, and particularly preferably from 10 m/min to 40 m/min.

The temperature of hot air is set to be preferably from 20°C to 80°C, more preferably from 30°C to 70°C, still more preferably from 40°C to 60°C so that the coating liquid film can be dried quickly.

When the coating liquid contains a cross-linking agent, drying and cross-linking in the drying process may be performed simultaneously or separately. For example, after the coating film is dried by being subjected to hot air, the coating film may be crosslinked by heating device such as an infrared heater, or the coating film may be dried and crosslinked by hot air. Thermal cross-linking may be performed by heating to approximately from 100°C to 150°C, for example.

### «Porous Protective Layer Formation Process»

The film 16B for porous protective layer formation fed from the roll 16A is superposed on the carbon dioxide separation layer 14 on the gas permeable support 12 formed through the coating process and the drying process and passed between the nip of the pair of rolls 56, 56 to be pressurized, and, thus, to be laminated, whereby the porous protective layer 16 is formed.

From the viewpoint of productivity, it is preferable that at least one of the pair of rolls 56, 56 is a heat roll. It is preferable that the heating temperature is set so that the carbon dioxide separation layer 14 and the gas permeable support 12 are not affected or least affected. Thus, it is preferable that laminating is performed at low temperature and low pressure. For example, when porous PTFE is used as the film 16B for porous protective layer formation, a surface temperature of the roll 56 is preferably in a range of from 70°C to 120°C. When the surface temperature is set in such a temperature range, the carbon dioxide separation layer 14 is adhered firmly so that the shape and the gas permeability of the porous protective layer 16 are not significantly affected. When heating is performed, a heat roller press having a surface temperature of 70°C to 120°C is preferred, and from the viewpoints that adhesion is favorable, and a change in shape of a support is suppressed, the surface temperature is more preferably in a range of from 80°C to 110°C. The surface temperature of the heat roller can be measured by a common contact or non-contact type thermometer.

The roller surface temperature can be suitably adjusted according to the heat resistance and the thickness of the film 16B for porous protective layer formation and the gas permeable support 12 in use, and when a heater is provided at each roller of the heat roller pair, the heat rollers may be set to the same temperature condition or different temperature conditions. Alternatively, the heater is provided at only one roller, and the other roller may be a support roller. In this case, the other support roller having no heater may be a metal roll, a rubber roll, or an elastic roll having a soft resin layer on its surface.

### «Process for Forming Supplied Gas Passage Member»

A film 18B for forming a supplied gas passage member, fed from a roll 18A, is superposed on the porous protective layer 16 formed through the coating process, the drying process, and the porous protective layer formation process and bonded by being passed between a nip of the pair of rolls 58, 58, whereby the member 18 for a supplied gas passage is formed. The process for forming a supplied gas passage member can be performed by a method similar to the porous protective layer formation process.

When the composite 10 for carbon dioxide separation according to the present invention is used by being incorporated into an after-mentioned spiral type module for carbon dioxide separation as a preferred embodiment, it is configured so that the porous protective layer 16, the carbon dioxide separation layer 14, and the gas permeable support 12 are provided on both surfaces of the member 18 for a supplied gas passage to be arranged symmetrically by interposing the member 18 for a supplied gas passage in between. Although the composite for carbon dioxide separation having such a configuration can be obtained by folding the composite for carbon dioxide separation shown in Fig. 1 into two while the member 18 for a supplied gas passage faces inside, an intermediate body provided with the carbon dioxide separation layer 14 and the porous protective layer 16 is produced on the gas permeable support 12, and a composite (hereinafter referred to as a "twofold composite for carbon dioxide separation") in which the intermediate body is folded into two so that the porous protective layer 16 is located inside while the member 18 for a supplied gas passage is interposed in between may be produced.

### <Module for Carbon Dioxide Separation>

The composite 10 for carbon dioxide separation according to the present invention is incorporated into a module for carbon dioxide separation when used. The kind of the module for carbon dioxide separation into which the composite 10 for carbon dioxide separation is incorporated is not limited particularly, and the module is suitably used in a common apparatus. In the following embodiment, although the spiral type module for carbon dioxide separation in which the composite 10 for carbon dioxide separation is housed while being helically wound around a porous hollow central pipe will be described as an example, the present invention is not limited thereto.

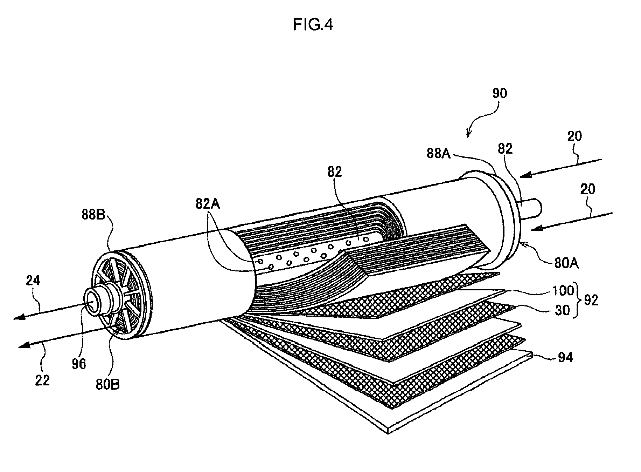

Fig. 4 is a schematic configuration diagram showing one embodiment of the spiral type module for carbon dioxide separation incorporated with the composite 10 for carbon dioxide separation according to the invention and partially cutout.

A spiral type module 90 for carbon dioxide separation is basically configured, around a permeable gas collecting pipe 82 constituted of a porous hollow pipe, so that a superposition 92 of a twofold composite 100 for carbon dioxide separation and a member 30 for a permeable gas passage is wound around the permeable gas collecting pipe 82, a plurality of times from a winding start side which is an end of the folded side of the twofold composite 100 for carbon dioxide separation, and the spiral type module 90 for carbon dioxide separation is configured so that the outermost periphery is covered with a covering layer 94, and telescope preventing plates 88A, 88B are attached to both ends, respectively.

In the module 90 for carbon dioxide separation thus configured, when a mixed supply gas containing carbon dioxide is supplied to the member 18 for a supplied gas passage of the composite 10 for carbon dioxide separation from the side of its one end 80A, carbon dioxide is removed while the gas passes through the member 18 for a supplied gas passage, as described above, and the module 90 separates the gas into the residual gas 22 and the removed carbon dioxide 24 and discharges the gases separately to the side of the other end 80B.

The permeable gas collecting pipe 82 is a cylindrical pipe having a plurality of through-holes 82A formed in its pipe wall. One end side (one end 80A side) of the permeable gas collecting pipe 82 is closed, and the other end side (the other end 80B side) of the pipe is open and serves as a discharge port 96 for permeating the composite 10 for carbon dioxide separation and discharging the collected carbon dioxide 24 through the through-holes 82A.

The covering layer 94 is formed of a blocking material capable of blocking the supply gas 20 passing through the module 90 for carbon dioxide separation. It is preferable that the blocking material has moisture-heat resistance.

It is preferable that the telescope preventing plates 88A, 88B are each formed of a moisture-heat resistant material.

The member 30 for a permeable gas passage is a member for flowing the carbon dioxide 24, reacting with the carbon dioxide carrier in the carbon dioxide separation layer 14 and discharged through the gas permeable support 12, toward the through-holes 82A of the permeable gas collecting pipe 82. The member 30 for a permeable gas passage has a function as a spacer and is preferably a net-like member as with the member 18 for a supplied gas passage. As a material of the member 30 for a permeable gas passage, a similar material to the member 18 for a supplied gas passage may be used. Since the supply gas 20 containing steam is flowed at a high temperature, the member 30 for a permeable gas passage preferably has moisture-heat resistance.

As specific materials of the member 30 for a permeable gas passage, polyester-based materials such as polyester impregnated with epoxy, polyolefin-based materials such as polypropylene, and fluorine-based material such as polytetrafluoroethylene are preferred.

Although thickness of the member 30 for a permeable gas passage is not limited particularly, the thickness is preferably from 100 µm to 1000 µm, more preferably from 150 µm to 950 µm, and sill more preferably from 200 µm to 900 µm.

### [Examples]

Hereinafter, the present invention will be more specifically described by referring to examples. The materials, the amounts used, the ratios, the processing contents, the processing orders, and so on shown in the following Examples can be suitably changed without departing from the scope of the present invention. Accordingly, the scope of the invention should not be interpreted as limited by the following specific examples.

Unless particularly mentioned, "%" and "parts" in the following examples mean "% by mass" and "parts by mass", respectively. "Film thickness" means "average thickness".

### [Example 1]

### <Preparation of Coating Liquid for Carbon Dioxide Separation Layer>

Water was added to a polyvinyl alcohol-polyacrylic acid salt copolymer (Kurastomer AP-22 manufactured by Kuraray Co., Ltd.) while being stirred. Then, cesium carbonate aqueous solution (solid content concentration: 40%) and potassium carbonate aqueous solution (solid content concentration: 40%) were added and then satisfactorily stirred under a temperature condition of 25°C, and an aqueous solution in which the concentration of the polyvinyl alcohol-polyacrylic acid salt copolymer as a water absorptive polymer was 2.5%, 0.25% of glutaraldehyde (Wako Pure Chemical Industries, Ltd.) was contained, and the concentrations of cesium carbonate and potassium carbonate as carbon dioxide carriers were respectively 6.0% and 1.0% was prepared, and defoaming was performed, whereby a coating liquid (1) for carbon dioxide separation layer was obtained.

### <Preparation of Composite for Carbon Dioxide Separation>

The above coating liquid (1) for carbon dioxide separation layer was coated onto a hydrophobic fine gas permeable support (manufactured by GE energy) having an average thickness of 300 µm and dried to form a carbon dioxide separation layer. The average thickness of the obtained carbon dioxide separation layer was 50 µm, and the water content property was 55%. It was confirmed that the carbon dioxide separation layer was not infiltrated into the hydrophobic fine gas permeable support from a cross-sectional SEM image.

PTFE (manufactured by W. L. Gore & Associates, Inc) having an average pore diameter of 0.05 µm, a film thickness of 40 µm, and a porosity of 70% was laminated onto the carbon dioxide separation layer to form a porous protective layer. The porous protective layer is referred to as an intermediate 1.

The intermediate 1 was folded into two so that the porous protective layer faced inside. At this time, a polypropylene net having a thickness of 0.5 mm was interposed as a supplied gas passage member, the porous protective layer and the polypropylene net were thermally fused at random portions, and the composite I for carbon dioxide separation was obtained. An adhesive (E120HP manufactured by Henkel Japan Ltd.) made of epoxy resin having a high viscosity (about 40 Pa·s) was applied to ends of both surfaces outside remaining three sides (hydrophobic fine gas permeable support side) other than one side of a folded portion of a twofold member of the composite 1 for carbon dioxide separation thus obtained, a tricot-stitch permeable gas passage member formed of polyester impregnated with epoxy was superposed on one side, and the composite 1 for carbon dioxide separation and the permeable gas flow passage member were wound around a permeable gas collection pipe in a multiple manner so that the permeable gas flow passage member was located outside.

According to this constitution, the module 1 for carbon dioxide separation was produced. At that time, an effective area of the carbon dioxide separation layer of the module was 0.025 m².

### [Example 2]

A module 2 for carbon dioxide separation was produced similarly to the Example 1, except that PTFE (manufactured by W. L. Gore & Associates, Inc) having an average pore diameter of 1 µm, a film thickness of 40 µm, and a porosity of 70% was used as the porous protective layer in the Example 1.

### [Example 3]

A module 3 for carbon dioxide separation was produced similarly to the Example 1, except that PTFE (manufactured by W. L. Gore & Associates, Inc) having an average pore diameter of 10 µm, a film thickness of 40 µm, and a porosity of 70% was used as the porous protective layer in the Example 1.

### [Example 4]

A module 4 for carbon dioxide separation was produced similarly to the Example 1, except that PP fine porous/PP non-woven fabric having an average pore diameter of 300 µm, a film thickness of 40 µm, and a porosity of 80% was used as the porous protective layer in the Example 1.

### [Example 5]

A module 5 for carbon dioxide separation was produced similarly to the Example 1, except that PTFE (manufactured by FUJIFILM Corporation) having an average pore diameter of 0.05 µm, a film thickness of 3 µm, and a porosity of 60% was used as the porous protective layer in the Example 1.

### [Example 6]

A module 6 for carbon dioxide separation was produced similarly to the Example 1, except that PTFE (manufactured by FUJIFILM Corporation) having an average pore diameter of 1.0 µm, a film thickness of 10 µm, and a porosity of 70% was used as the porous protective layer in the Example 1.

### [Example 7]

A module 7 for carbon dioxide separation was produced similarly to the Example 1, except that PTFE (manufactured by FUJIFILM Corporation) having an average pore diameter of 0.5 µm, a film thickness of 20 µm, and a porosity of 77% was used as the porous protective layer in the Example 1.

### [Example 8]

A module 8 for carbon dioxide separation was produced similarly to the Example 1, except that polypropylene non-woven fabric (manufactured by Tokuyama Corporation) having an average pore diameter of 1.0 µm, a film thickness of 500 µm, and a porosity of 68% was used as the porous protective layer in the Example 1.

### [Example 9]

A module 9 for carbon dioxide separation was produced similarly to the Example 1, except that polypropylene non-woven fabric (manufactured by Tokuyama Corporation) having an average pore diameter of 2.0 µm, a film thickness of 800 µm, and a porosity of 60% was used as the porous protective layer in the Example 1.

### [Example 10]

A module 10 for carbon dioxide separation was produced similarly to the Example 1, except that PTFE (manufactured by FUJIFILM Corporation) having an average pore diameter of 0.005 µm, a film thickness of 20 µm, and a porosity of 67% was used as the porous protective layer in the Example 1.

### [Example 11]

A module 11 for carbon dioxide separation was produced similarly to the Example 1, except that polypropylene non-woven fabric (manufactured by Tokuyama Corporation) having an average pore diameter of 600 µm, a film thickness of 400 µm, and a porosity of 80% was used as the porous protective layer in the Example 1.

### [Example 12]

A module 12 for carbon dioxide separation was produced similarly to the Example 1, except that a polypropylene net having an average pore diameter of 600 µm, a film thickness of 800 µm, and a porosity of 80% was used as the porous protective layer in the Example 1.

### [Comparative example 1]

A module C1 for carbon dioxide separation was produced similarly to the Example 1, except that the porous protective layer was not provided on the carbon dioxide separation layer in the Example 1.

### [Comparative example 2]

A carbon dioxide separation layer was formed on a hydrophobic fine gas permeable support (manufactured by GE energy) as in the Example 1. A feed spacer having a thickness of 480 µm was installed on the carbon dioxide separation layer, and a polymethylpentene film having a thickness of 25 µm was placed thereon. Then, the whole support was fixed onto a tricot-stitch permeable gas passage formed of epoxy-containing polyester with an adhesive, and winding is performed at a speed of 0.1 m/min by an automatic winder, whereby a module C2 for carbon dioxide separation was produced.

### [Comparative example 3]

A coating liquid the same as the coating liquid (1) for carbon dioxide separation layer used in the Example 1 was coated and dried, by a roll-to-roll process, on a surface on a hydrophilic PTFE porous membrane side of a composite support in which a hydrophilic PTFE porous membrane (WPW-020-80 manufactured by Sumitomo Electric Industries, Ltd. and having a film thickness of 80 µm, a micropore diameter of 0.2 µm, and a porosity of about 75%) and a hydrophobic PTFE porous membrane (Fluoropore FP010 manufactured by Sumitomo Electric Industries, Ltd. and having a film thickness of 60 µm, a micropore diameter of 0.1 µm, and a porosity of about 55%) were superposed so that the two membranes have the same width, whereby a composite for a carbon dioxide separation layer was formed.

The composite for a carbon dioxide separation layer formed by the above method was folded into two so that the carbon dioxide separation layer faced inside, and an adhesive (E120HP manufactured by Henkel Japan Ltd.) made of epoxy resin having a high viscosity (about 40 Pa·s) was applied to ends of both outer sides of three sides (hydrophobic PTFE porous membrane side of a composite support) other than a side of a folded portion of a twofold member, a tricot-stitch permeable gas passage member formed of polyester impregnated with epoxy was superposed on one side, and the composite for carbon dioxide separation and the permeable gas flow passage member were wound around a permeable gas collection pipe in a multiple manner so that the permeable gas flow passage member was located outside.

According to this constitution, a module C3 for carbon dioxide separation was produced. At that time, an effective area of the carbon dioxide separation layer of the module was 0.025 m².

### <Evaluation of Composite for Carbon Dioxide Separation>

CO₂ permeation rate (P(CO₂)) and CO₂/H₂ separation coefficient (α) in the following three kinds of evaluation methods were measured and calculated using each of the produced modules for carbon dioxide separation. The results are shown in Table 1.

### Evaluation method 1

As a test gas, a raw material gas in which H₂:CO₂:H₂O = 45:5:50 (flow rate: 2.2 L/min) was used under conditions that a temperature was 130°C and the total pressure was 301.3 kPa, each acidic gas was supplied to the separation module, and an Ar gas (flow rate: 0.6 L/min) was flowed to a permeation side. The permeated gas was analyzed by a gas chromatograph, and the CO₂ permeation rate (P(CO₂)) and CO₂/H₂ separation coefficient (α) were calculated. In P(CO₂), GPU was used as a unit system

### Evaluation method 2

As a test gas, a raw material gas in which H₂:CO₂:H₂O = 45:5:50 (flow rate: 2.2 L/min) was used under a condition that dew condensation occurs, that is, conditions that a temperature was 130°C and the total pressure was 101.3 kPa, each acidic gas was supplied to the separation module, and an Ar gas (flow rate: 0.6 L/min) was flowed to a permeation side. The permeated gas was analyzed by a gas chromatograph, and the CO₂ permeation rate (P(CO₂)) and CO₂/H₂ separation coefficient (α) were calculated. In P(CO₂), GPU was used as a unit system.

### Evaluation method 3

As a test gas, a raw material gas in which H₂:CO₂:H₂O = 72:8:20 (flow rate: 10 L/min) was used under conditions that a temperature was 130°C and the total pressure was 1601.3 kPa, each acidic gas was supplied to the separation module, and an Ar gas (flow rate: 0.6 L/min) was flowed to a permeation side. The permeated gas was analyzed by a gas chromatograph, and the CO₂ permeation rate (P(CO₂)) and CO₂/H₂ separation coefficient (α) were calculated. In P(CO₂), GPU was used as a unit system

**[Table 1]**

| Module for carbon dioxide separation | Porous protective film | | Evaluation method 1 | | Evaluation method 2 | | Evaluation method 3 | |
|---|---|---|---|---|---|---|---|---|
| | Average thickness (µm) | Average pore diameter (µm) | P(CO₂)/GPU | α | P(CO₂)/GPU | α | P(CO₂)/GPU | α |
| 1 | 40 | 0.05 | 51 | 101 | 52 | 100 | 47 | 90 |
| 2 | 40 | 1.0 | 53 | 103 | 49 | 95 | 36 | 85 |
| 3 | 40 | 10 | 54 | 110 | 43 | 67 | 33 | 70 |
| 4 | 40 | 300 | 56 | 115 | 35 | 64 | 22 | 55 |
| 5 | 3 | 0.05 | 65 | 120 | 63 | 111 | 48 | 93 |
| 6 | 10 | 1.0 | 54 | 110 | 50 | 99 | 33 | 84 |
| 7 | 20 | 0.5 | 52 | 99 | 48 | 95 | 47 | 91 |
| 8 | 500 | 1.0 | 48 | 95 | 46 | 89 | 44 | 88 |
| 9 | 800 | 2.0 | 42 | 80 | 41 | 78 | 36 | 75 |
| 10 | 20 | 0.005 | 48 | 99 | 47 | 86 | 45 | 84 |
| 11 | 400 | 600 | 40 | 83 | 39 | 71 | 37 | 68 |
| 12 | 800 | 600 | 38 | 70 | 37 | 68 | 35 | 60 |
| C1 | - | - | 25 | 40 | 12 | 20 | 5 | 2 |
| C2 | - | - | 21 | 37 | 20 | 38 | 19 | 30 |
| C3 | 60 | 0.1 | 15 | 20 | 12 | 15 | 7 | 3 |

As shown in Table 1, it is found that the modules 1 to 12 for carbon dioxide separation using the composite for carbon dioxide separation according to the present invention exhibit high CO₂ permeation rate and CO₂/H₂ separation coefficient in every evaluation method. Namely, it is found that even if the concentration of carbon dioxide contained in a supply gas and the steam concentration vary, stable separation of carbon dioxide is achieved.

Meanwhile, in the modules C1 and C2 for carbon dioxide separation using the composite for carbon dioxide separation having no porous protective layer, although certain separation of carbon dioxide is achieved in a mild condition, it is found that the carbon dioxide separation performance is inferior under a more severe condition. The module C3 for carbon dioxide separation in which the carbon dioxide separation layer is formed of a heterogeneous membrane, and the composite for carbon dioxide separation having no supplied gas passage member is used is a carbon dioxide separation layer formed of a heterogeneous membrane in which the carbon dioxide separation layer infiltrates into a hydrophilic PTFE porous membrane of a composite support, and in combination with this, it is found that the carbon dioxide separation performance is inferior under every use condition including a mild condition and a more sever condition.

The entire disclosures of Japanese Patent Application No. 2012-217832 filed on September 28, 2012 and Japanese Patent Application No. 2013-179770 filed on August 30, 2013 are incorporated herein by reference.

## Claims

1. A composite for carbon dioxide separation, comprising, in the following order:
a gas permeable support;
a carbon dioxide separation layer containing a water absorptive polymer and a carbon dioxide carrier;
a steam permeable porous protective layer having an average thickness of from 1 µm to 500 µm; and
a supplied gas passage member.

2. The composite for carbon dioxide separation according to claim 1, wherein an average pore diameter of the porous protective layer is from 0.005 µm to 1000 µm.

3. The composite for carbon dioxide separation according to claim 1 or 2, wherein a porosity of the porous protective layer is from 3% to 90%.

4. The composite for carbon dioxide separation according to any one of claims 1 to 3, wherein the porous protective layer is configured from at least one of polytetrafluoroethylene, polyvinylidene-fluoride, polymethylpentene, polyphenylene sulfide, polyether sulfone, polypropylene, polysulfone, polyacrylonitrile, polyimide, or polyamide.

5. The composite for carbon dioxide separation according to any one of claims 1 to 4, wherein the porous protective layer and the supplied gas passage member are secured to each other.

6. The composite for carbon dioxide separation according to any one of claims 1 to 5, wherein the supplied gas passage member has an average thickness of from 100 µm to 1000 µm.

7. A module for carbon dioxide separation, comprising:
the carbon dioxide separation composite according to any one of claims 1 to 6, helically wound around a porous hollow central pipe.

8. A method for producing a composite for carbon dioxide separation, the method comprising:
a carbon dioxide separation layer formation process for coating an aqueous solution containing a water absorptive polymer and a carbon dioxide carrier onto a gas permeable support, drying the coating, and forming a carbon dioxide separation layer; and
a porous protective layer formation process for laminating a steam permeable porous protective layer having an average thickness of from 1 µm to 500 µm onto the carbon dioxide separation layer.

9. A method for producing a composite for carbon dioxide separation, the method comprising:
a carbon dioxide separation layer formation process for coating an aqueous solution containing a water absorptive polymer and a carbon dioxide carrier onto a gas permeable support, drying the coating, and forming a carbon dioxide separation layer;
a porous protective layer formation process for laminating a steam permeable porous protective layer having an average thickness of from 1 µm to 500 µm onto the carbon dioxide separation layer; and
a supplied gas passage member formation process for bonding the supplied gas passage member onto the porous protective layer.
